# EUROPEAN PATENT APPLICATION

(11) **EP 4 109 954 A1**
(43) Date of publication of application: **28.12.2022**
(21) Application number: 20920667.1
(22) Date of filing: 20.02.2020
(51) Int. Cl.: H04W 16/28, H04L 1/18, H04B 7/06, H04W 28/04

(54) **TERMINAL, WIRELESS COMMUNICATION METHOD AND BASE STATION**

(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2020/006937
(87) International publication number: WO 2021/166200

(57) **Abstract**

A terminal according to one aspect of the present disclosure includes a transmitting section that transmits a retransmission instruction based on a reception status of a data channel, and a receiving section that receives the data channel retransmitted from an antenna group different from a source antenna group for the data channel. According to one aspect of the present disclosure, communication can be appropriately implemented even in a case where distributed MIMO technology is employed.

## Description

### Technical Field

The present disclosure relates to a terminal, a radio communication method, and a base station in next-generation mobile communication systems.

### Background Art

In Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G))," "5G+ (plus)," 6th generation mobile communication system (6G), "New Radio (NR)," "3GPP Rel. 15 (or later versions)," and so on) are also under study.

In existing LTE systems (for example, 3GPP Rel. 8 to Rel. 14), a user terminal (UE (User Equipment)) uses at least one of a UL data channel (for example, a PUSCH (Physical Uplink Shared Channel)) and a UL control channel (for example, a PUCCH (Physical Uplink Control Channel) to transmit uplink control information (UCI) .

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For NR in Rel. 17 or later versions, in communication between the user terminal (UE (User Equipment)) and a network (NW, for example, a base station), studies have been conducted about expansion of area coverage utilizing distributed MIMO (Multi Input Multi Output) based on millimeter waves (mmWave).

Whether the distributed MIMO technology is employed in Rel. 17 or later versions has been discussed. However, sufficient studies have not been conducted about a method for controlling UEs communicating with the NW in the distributed MIMO technology. Unless the control is clarified, an increase in communication throughput may be suppressed.

Thus, an object of the present disclosure is to provide a user terminal, a radio communication method, and a base station that can appropriately implement communication even in a case where the distributed MIMO technology is employed.

### Solution to Problem

A terminal according to an aspect of the present disclosure includes a transmitting section that transmits a retransmission instruction based on a reception status of a data channel, and a receiving section that receives the data channel retransmitted from an antenna group different from a source antenna group for the data channel.

### Advantageous Effects of Invention

According to an aspect of the present disclosure, communication can be appropriately implemented even in a case where the distributed MIMO technology is employed.

### Brief Description of Drawings

FIG. 1 is a diagram to show an example of an SFN in a tunnel;
FIGS. 2A and 2B are diagrams of an example in which a plurality of antennas or a plurality of TRPs are disposed around a base station;
FIGS. 3A and 3B are diagrams to show an example of a structure of antennas disposed around the base station;
FIG. 4 is a diagram to show an example of communication based on an antenna configuration (1);
FIG. 5 is a diagram to show an example of communication based on an antenna configuration (2);
FIGS. 6A and 6B are diagrams to show an example of communication based on the antenna configuration (2);
FIGS. 7A and 7B are diagrams to show an example of association between antenna points and antenna groups;
FIGS. 8A and 8B are diagrams to show an example of association between antenna points and antenna groups;
FIG. 9 is a diagram to show an example of association among antenna points and antenna ports and antenna groups;
FIG. 10 is a diagram to show an example of a first region and a second region;
FIG. 11 is a diagram to show an example of allocation of resources to a plurality of user terminals;
FIG. 12 is a diagram to show a first example of a QCL configuration;
FIG. 13 is a diagram to show a second example of the QCL configuration;
FIG. 14 is a diagram to show a third example of the QCL configuration;
FIG. 15 is a diagram to show a fourth example of the QCL configuration;
FIG. 16 is a diagram to show a second region (third region) overlapping the first region in terms of time resources;
FIG. 17 is a diagram to show a first example in which the antenna group is changed;
FIG. 18 is a diagram to show a second example in which the antenna group is changed;
FIG. 19 is a diagram to show a configuration example of NACK resources;
FIG. 20 is a diagram to show an example in which data from a plurality of antenna groups are scheduled in the second region;
FIG. 21 is a diagram to show an example in which a plurality of antenna groups transmit data to a plurality of UEs;
FIGS. 22A and 22B are diagrams to show an example in which DCI is selected based on received power;
FIG. 23 is a diagram to show an example in which DCI is determined based on the measurement of the received power of an RS;
FIGS. 24A, 24B, and 24C are diagrams to show an example of association between DCI and groups;
FIG. 25 is a diagram to show an example in which DCI is selected for each region;
FIG. 26 is a diagram to show an example of a schematic structure of a radio communication system according to one embodiment;
FIG. 27 is a diagram to show an example of a structure of a base station according to one embodiment;
FIG. 28 is a diagram to show an example of a structure of a user terminal according to one embodiment; and
FIG. 29 is a diagram to show an example of a hardware structure of the base station and the user terminal according to one embodiment.

### Description of Embodiments

In successor systems of LTE (e.g., referred to as "5th generation mobile communication system (5G))," "5G+ (plus)," "New Radio (NR)," and so on), a radio communication method using millimeter waves has been introduced. In Rel. 15 NR, hybrid beamforming based on massive MIMO (for example, beam management) has been introduced, and in Rel. 16 NR, distributed MIMO (multi TRP) has been introduced to improve the communication speed and reliability of a downlink shared channel (PDSCH).

For NR in Rel. 17 or later versions, the distributed MIMO (multi TRP) is expected to improve the communication speed and reliability of the channels other than the downlink shared channel (PDSCH). For NR in Rel. 17 or later versions, beam management is expected to be improved in a scenario using a moving body such as a train which moves at high speed (HTS (High Speed Train)).

However, the improvement of the communication speed and reliability is of a best effort type and is limited in the area to which improvement is applied.

Compared to 5G described above, successor systems of NR (also referred to as, for example, 5G+, 6G, and so on) require a high data rate/capacity, a wide coverage, low energy/costs, low latency, high reliability, multiple connections, and so on. In the present disclosure, the phrase "A/B" may mean that "at least one of A and B."

In response to requirements in 6G described above, the best effort type communication is expected to be shifted to quality assurance type communication. High speed/high reliability communication is expected to be expanded to all-area application instead of area-limited application.

A radio communication method employing millimeter waves poses a plurality of problems. The problems include, for example, an increase in propagation loss caused by an increased communication distance, an increase in non-line of sight loss caused by high straightness of radio waves, difficulty in implementing high-order SU-MIMO (Single User MIMO) due to few paths in multipath, an increase in device installation density caused by increased sizes of devices, and the like.

In LTE systems, a single frequency network ((SFN), each antenna has an identical cell ID) is operated that employs a plurality of small antennas within an architectural structure (for example, a tunnel, a building, or the like). The SFN is a method for simultaneously transmitting the same signal in the same physical resource block (PRB) using a plurality of antennas, and UEs receiving the signal assume that the signal has been transmitted from one point.

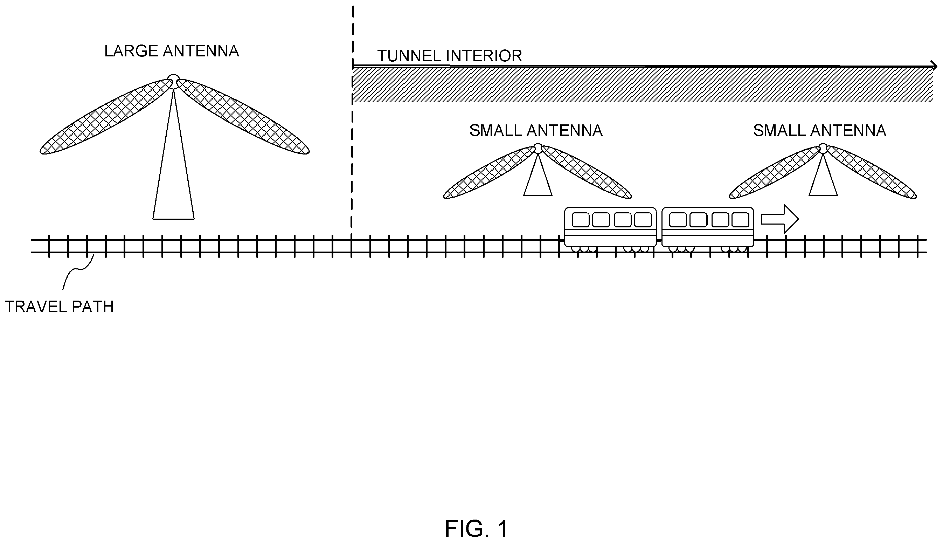

FIG. 1 is a diagram to show an example of an SFN in a tunnel. In FIG. 1, for example, a large antenna is installed outside the tunnel (for example, near a tunnel entrance), and small antennas are installed inside the tunnel. The large antenna may be, for example, an antenna with a transmission power of approximately 1 to 5 W. The small antenna may, for example, be an antenna with a transmission power of approximately 250 mW. The large antenna may transmit downlink (DL) signals to the inside and outside of tunnel, and the small antenna may transmit DL signals to the inside of the tunnel. The large antenna may perform handover before a UE enters the tunnel. The large antenna and the small antennas in FIG. 1 may simultaneously transmit the same DL signal to one UE in the same PRB. Note that the arrangement and transmission power of the antennas in FIG. 1 are only illustrative and are not limited to this example. The SFN in the tunnel may be replaced with an IMCS (Inbuilding Mobile Communication System).

Note that, in the present disclosure, "transmission of DL signals from the antenna" may be replaced with "reception of uplink (UL) signals at the antenna." Note that "reception of DL signals at the UE" may be replaced with "transmission of UL signals from the UE."

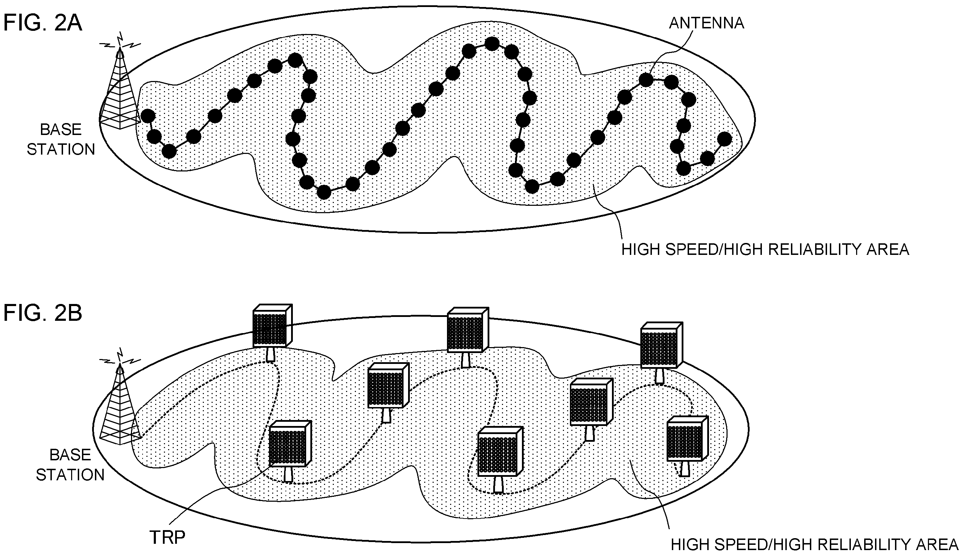

A method has been under study in which a large number of antenna points are installed everywhere within the area for area expansion employing distributed MIMO utilizing millimeter waves. For example, as shown in FIG. 2A, a plurality of high-frequency antennas having a relatively narrow coverage may be installed everywhere within the area and connected together in series, with a low-frequency base station that has a relatively wide coverage being located at a start point of the connection to ensure a high speed and high reliable area.

Note that the low-frequency base station having a relatively wide coverage as used herein may simply be referred to as a base station. The high-frequency antenna having a relatively narrow coverage may simply be referred to as an antenna.

The plurality of antennas may be installed on a ceiling/wall inside a building as well as being installed outdoors for operation. For example, the antennas may be installed near an illumination light source in the building, and in this case, are likely to be within a line of sight to a plurality of UEs inside the building, enabling a reduction in propagation loss.

FIG. 2A is a diagram showing an example in which a plurality of antennas are disposed around the base station. For example, the method for installing antenna points everywhere within the area as shown in FIG. 2A can be implemented at low cost. However, the utilization efficiency of resources are difficult to optimize, and an increased distance to the high-frequency antenna disadvantageously leads to an increased propagation loss.

On the other hand, studies have also been conducted about a method in which some of the functions of the base station is installed around high-frequency antennas for area expansion employing distributed MIMO utilizing millimeter waves. This method is similar to a method in which a plurality of transmission/reception points (TRPs) are disposed around the base station.

FIG. 2B is a diagram showing an example in which a plurality of TRPs are disposed around the base station. For example, the method in which a plurality of TRPs are extended around the base station as shown in FIG. 2B allows resource control for each TRP and enables a reduction in propagation loss by utilizing optical fibers or the like.

Note that the "antenna point" may mean an "antenna corresponding to a physical antenna element," or an "antenna corresponding to a plurality of physical antenna points." The antenna port may mean an "antenna for a signal processing unit including one or more antenna points," a "signal processing unit corresponding to one or more antenna points," a "logical entity corresponding to signals output from one or more antenna points," and so on. The antenna group may mean a "plurality of antennas including one or more antenna points," or a "plurality of antennas including one or more antenna ports."

The antenna point as used herein may be replaced with an "antenna end," an "antenna port," an "antenna group," an "antenna element," an "antenna position," a "high-frequency antenna point," a "high-frequency antenna end," a "high-frequency antenna port," a "high-frequency antenna group," a "high-frequency antenna element," a "high-frequency antenna position," and so on.

The "antenna group" as used herein may be replaced with an "antenna set," a "high-frequency antenna group," a "high-frequency antenna set," and so on.

Two configurations have been under study as methods in which a large number of antenna points are installed everywhere within the area for area expansion employing distributed MIMO utilizing millimeter waves.

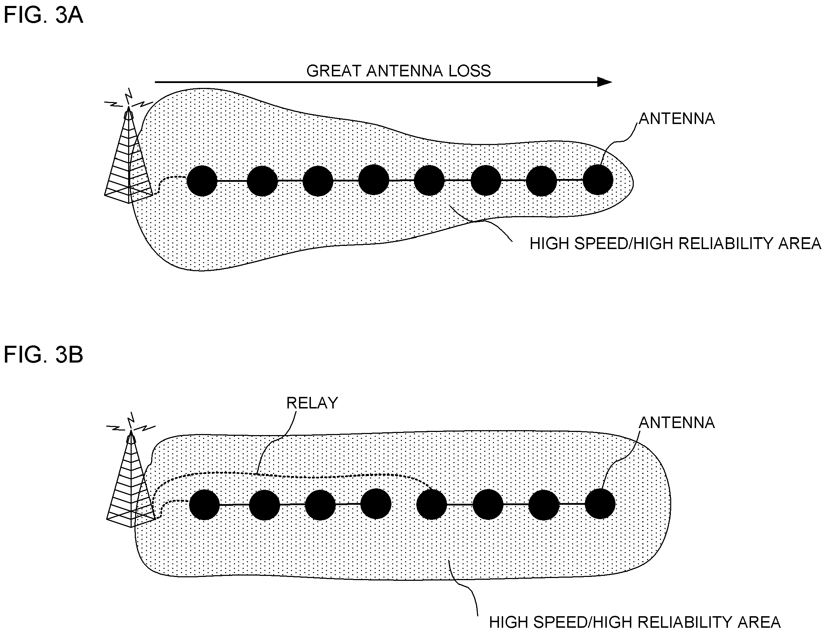

As one of the configurations, a configuration (antenna configuration (1)) has been under study in which high-frequency antennas are connected together by electric wires to continuously extend the antennas in a certain direction, as shown in FIG. 3A. This antenna configuration can reduce configuration costs but is expected to involve a greater antenna loss near antennas relatively far from the base station.

As the other configuration, a configuration (antenna configuration (2)) has been under study in which signals are relayed to some of the antennas (for example, optical fibers, IAB, or the like is used for the relay), as shown in FIG. 3B. This antenna configuration can reduce the antenna loss even for antennas at relatively long distances from the base station.

In the antenna configuration (1), the same signal may be transmitted from all antenna points. In a case where the UE is located near one of a plurality of high-frequency antenna point, DL communication with the UE is enabled. At this time, the NW need not recognize which antenna corresponds to the antenna near which the UE is located, allowing overhead to be suppressed. However, when the same transmission signal is transmitted from all the antenna points, locational frequency utilization efficiency decreases.

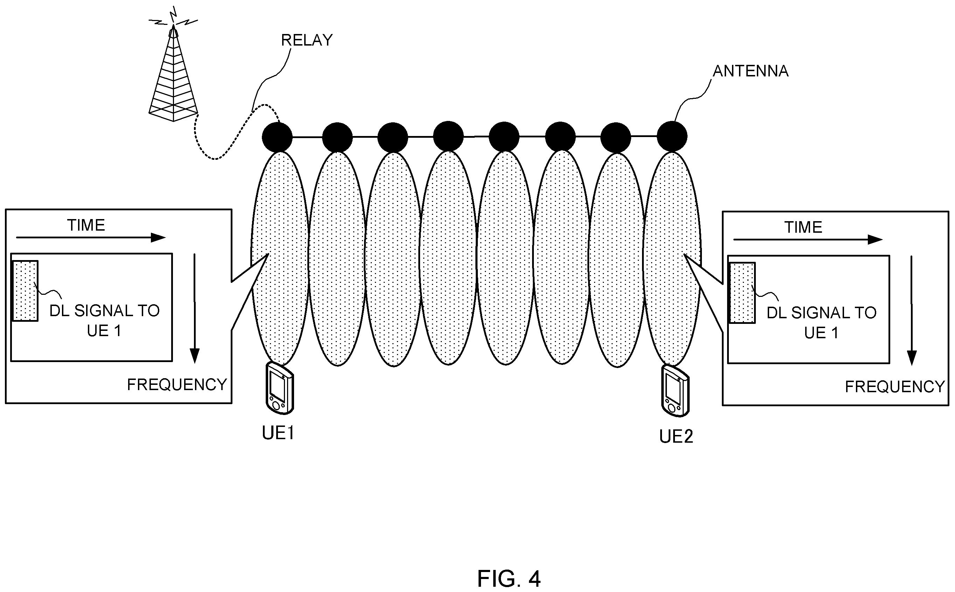

FIG. 4 is a diagram to show an example of communication based on the antenna configuration (1). In FIG. 4, a high-frequency antenna transmits a DL signal directed to UE 1. In this case, UE 1 near the high-frequency antenna can communicate. Only low contribution to improvement of a reception signal received by UE 1 is made by transmission signals transmitted, to UE 1, from high-frequency antennas relatively far from the base station. Consequently, frequency resources are preferably utilized for UE 2 also located near a high-frequency antenna.

To solve the problem with the antenna configuration (1), the series of antenna points may be separated into a plurality of antenna points, and antenna groups may be provided each of which includes a plurality of consecutive antenna points, and each of the antenna groups may transmit an independent transmission signal.

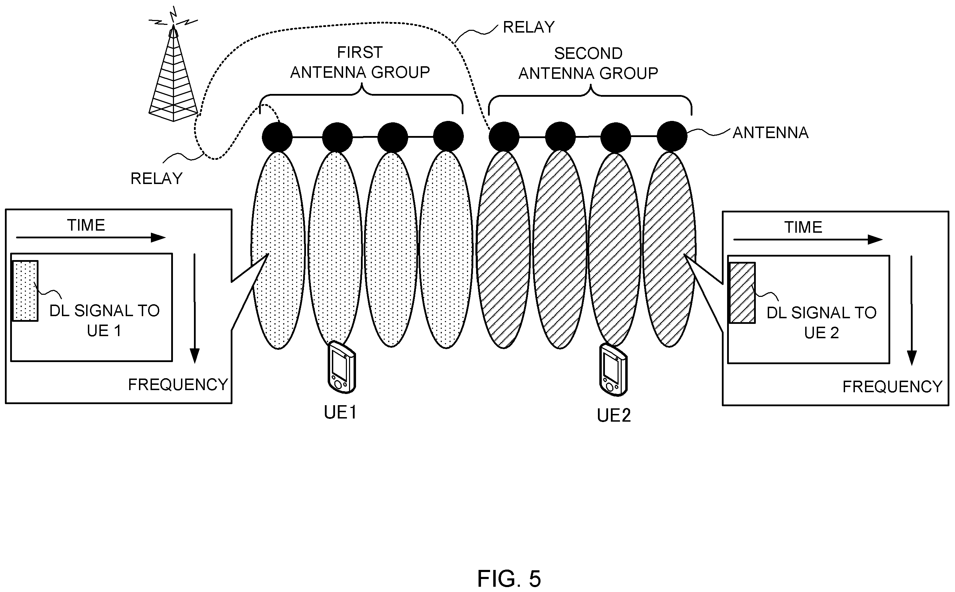

FIG. 5 is a diagram to show an example of communication based on the antenna configuration (2). For example, as shown in FIG. 5, antenna points relatively close to the base station (antenna points #1 to #4) are designated as a first antenna group and antenna points relatively far from the base station (antenna points #5 to #8) are designated as a second antenna group, UE 1 located near the first antenna group and UE 2 located near the second antenna group can appropriately communicate with the NW.

Note that in the configuration in the example in FIG. 5, the base station may include a function to schedule each antenna group to perform relaying for each antenna group (for example, relaying based on extension of optical fibers or the like) or that each antenna group may include some of the functions of base station.

In the antenna configuration (2), each antenna group may transmit an identical DL signal/reference signal (RS). In the antenna configuration (2), some of the antenna groups may transmit an identical (common) DL signal/RS, whereas other antenna groups may transmit a different DL signal/RS.

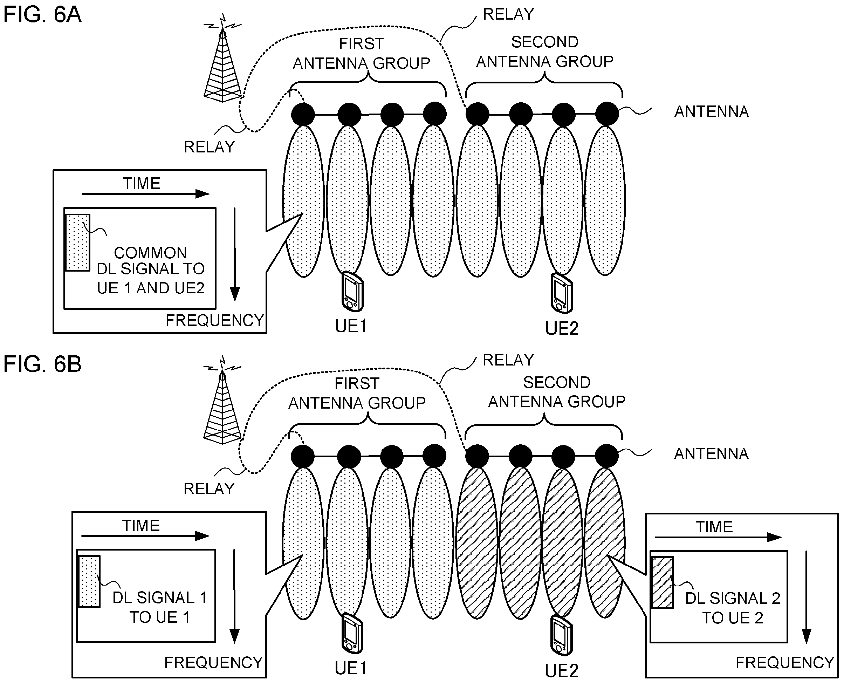

FIGS. 6A and 6B are diagrams to show an example of communication based on the antenna configuration (2). In FIG. 6A, the first antenna group and the second antenna group transmit a common DL signal to UE 1 and UE 2. On the other hand, in FIG. 6B, the first antenna group transmits DL signal 1 to UE 1, whereas the second antenna group transmits DL signal 2 to UE 2.

### (TCI, Spatial Relation, and QCL)

For NR, studies have been conducted about control of processing of reception (for example, at least one of reception, demapping, demodulation, and decoding) and transmission (for example, at least one of transmission, mapping, precoding, modulation, and coding) of at least one of a signal and a channel (hereinafter represented as a signal/channel) by the UE based on a transmission configuration indication state (TCI state).

The TCI state may represent a state applied to downlink signals/channels. A state corresponding to a TCI state applied to uplink signals/channels may be represented as a space relation.

The TCI state is information related to quasi-co-location (QCL) of the signal/channel and may also be referred to as a spatial reception parameter, spatial relation information, and so on. The TCI state may be configured for the UE for each channel or signal.

Note that the DL TCI state as used herein may be replaced with a UL spatial relation, a UL TCI state, and so on.

The QCL is an indicator for statistical properties of the signal/channel. For example, in a case where a certain signal/channel and another signal/channel are in a QCL relation, this may mean that an assumption can be made that at least one of a Doppler shift, a Doppler spread, an average delay, a delay spread, and a spatial parameter (for example, a spatial Rx parameter) is identical between the plurality of different signals/channels (the signals/channels are in a QCL relation in terms of at least one of the listed above).

Note that the spatial Rx parameter may correspond to a reception beam of the UE (for example, a reception analog beam) and that the beam may be identified based on the spatial QCL. The QCL as used herein (or at least one element of the QCL) may be replaced with sQCL (spatial QCL).

A plurality of types of QCL (QCL type) may be specified. For example, four QCL types A to D including different parameters (or parameter sets) that can be assumed to be identical may be provided, and the parameters (that may also be referred to as QCL parameters) are illustrated below:
- QCL type A (QCL-A): Doppler shift, Doppler spread, average delay, and delay spread,
- QCL type B (QCL-B): Doppler shift and Doppler spread,
- QCL type C (QCL-C): Doppler shift and average delay,
- QCL type D (QCL-D): spatial Rx parameter.

QCL assumption may refer to the assumption that a certain control resource set (CORESET), channel, or reference signal is in a particular QCL (for example, QCL type D) relation with another CORESET, channel, or reference signal, the assumption being made by the UE.

The UE may determine at least one of a transmission beam (Tx beam) and a reception beam (Rx beam) for the signal/channel based on the TCI state or QCL assumption of the signal/channel.

The TCI state may be, for example, information related to the QCL between a target channel (in other words, a reference signal (RS) for the channel) and another signal (for example, another RS). The TCI state may be configured (indicated) through higher layer signaling, physical layer signaling, or a combination thereof.

For example, the higher layer signaling as used herein may be any one or combinations of RRC (Radio Resource Control) signaling, MAC (Medium Access Control) signaling, broadcast information, and the like.

For example, the MAC signaling may use MAC control elements (MAC CE), MAC Protocol Data Units (PDUs), and the like. For example, the broadcast information may be master information blocks (MIBs), system information blocks (SIBs), minimum system information (RMSI (Remaining Minimum System Information)), other system information (OSI), and so on.

The physical layer signaling may be, for example, downlink control information (DCI).

The channel for which the TCI state or the space relation is configured (indicated) may be at least one of, for example, a downlink shared channel ((PDSCH) Physical Downlink Shared Channel), a downlink control channel ((PDCCH) Physical Downlink Control Channel), an uplink shared channel ((PUSCH) Physical Uplink Shared Channel), and an uplink control channel ((PUCCH) Physical Uplink Control Channel).

The RS that is in a QCL relation with the channel may be, at least one of, for example, a synchronization signal block (SSB), a channel state information reference signal (CSI-RS), a sounding reference signal (SRS), a tracking CSI-RS (also referred to as a tracking reference signal (TRS)), and a QCL detection reference signal (also referred to as a QRS).

The SSB is a signal block including at least one of a primary synchronization signal (PSS), a secondary synchronization signal (SSS), and a broadcast channel ((PBCH) Physical Broadcast Channel). The SSB may also be referred to as an SS/PBCH block.

An information element ("TCI-state IE" in RRC) of the TCI state configured through higher layer signaling may include one or a plurality of pieces of QCL information ("QCL-Info"). The QCL information may include at least one piece of information related to the RS in a QCL relation (RS relation information) and information indicating the QCL type (QCL type information). The RS relation information may include information such as an RS index (for example, an SSB index, or a non-zero-power (NZP) CSI-RS resource ID (Identifier)), the index of the cell in which the RS is located, and the index of the BWP (Bandwidth Part) in which the RS is located.

In Rel. 15 NR, as the TCI state of at least one of the PDCCH and the PDSCH, both the RS for the QCL type A and the RS for the QCL type D or only the RS for the QCL type A may be configured for the UE.

In a case where the TRS is configured as the RS for the QCL type A, unlike a demodulation reference signal (DMRS) for the PDCCH or the PDSCH, the TRS is expected to be transmitted such that the same TRS is periodically transmitted for an extended period of time. The UE can measure the TRS and calculate the average delay, the delay spread, and the like.

In a case where, for the UE, the TRS is configured as the RS for the QCL type A, in the TCI state of the DMRS for the PDCCH or the PDSCH, the UE can assume that the DMRS for the PDCCH or the PDSCH is the same as the QCL type A parameters (average delay, delay spread, and the like) for the TRS. Thus, the type A parameters (average delay, delay spread, and the like) for the DMRS for the PDCCH or the PDSCH can be determined from measurement results for the TRS. When performing channel estimation for at least one of the PDCCH and the PDSCH, the UE can use the measurement results for the TRS to perform more accurate channel estimation.

In a case where the RS for the QCL type D is configured for the UE, the UE can use the RS for the QCL type D to determine the UE reception beam (spatial domain filter, and UE spatial domain reception filter).

The RS for the QCL type X for TCI state may mean the RS in the QCL type X relation with (the DMRS for) a certain channel/signal, and the RS may be referred to as a QCL source of the QCL type X for the TCI state.

Whether the distributed MIMO technology utilizing the above-described antenna configuration is employed in Rel. 17 or later versions has been discussed. However, sufficient studies have not been conducted about a method for controlling UEs communicating with the NW in the distributed MIMO technology.

Thus, the inventors of the present invention came up with a method in which communication is appropriately performed even in a case where the distributed MIMO technology is used that utilizes the above-described antenna configuration.

Embodiments according to the present disclosure will be described in detail with reference to the drawings as follows. The aspects of each embodiment may be employed independently or may be employed in combination.

### (Radio Communication Method)

### <First Embodiment>

The inventors of the present invention focused on a long physical distance between the antenna points within the antenna group leading to possible phase shifts among signals to and from the respective antenna points, and came up with a first embodiment.

Separate TCI states may be configured for the respective antenna points. In other words, the UE may expect that separate TCI states (for example, different TCI states) may be configured for the respective antenna points. Note that the TCI state as used herein may be replaced with at least one of the DL TCI state, the UL TCI state, a unified TCI state, the spatial relation, the QCL, a QCL assumption, and the QCL type.

For example, the UE may expect that the TCI state is separately configured in units of antenna points. In other words, configuration of different TCI states for a plurality of antenna points may be supported. In other words, the UE may expect that the TCI state is separately configured in units of (sets of) a plurality of antenna points.

The UE may expect that a particular QCL type (for example, the QCL type D) is separately configured in units of antenna groups. For example, the UE may assume that at least a particular QCL type is the same among the antenna points (for example, the antenna points for which antenna point multiplexing is performed in at least one of a code domain, a spatial domain, and a beam domain) within the same CDM (Code Division Multiplexing) group, and may receive the demodulation reference signal (DMRS) corresponding to this CDM group. The UE assumes that the QCL types other than a particular QCL type vary among the antenna points (for example, the antenna points on which antenna point multiplexing is performed in at least one of the time domain and the frequency domain) in different CDM groups, and may receive the DMRSs corresponding to these CDM groups.

Note that as used herein, the following may be replaced with one another: the CDM group, the group, the CORESET, the PDSCH, a codeword, the antenna port group (for example, a DMRS port group), a reference signal group, a CORESET group, and the like. The antenna group and the TRP may be replaced with each other.

The TCI state (QCL) may be configured for the antenna points through higher layer signaling (for example, RRC signaling), physical layer signaling (for example, DCI), or a combination thereof. For example, the QCL may be semi-statically configured for one or more antenna points through RRC signaling. For the QCL for one or more antenna points, selection may be made, by using an MAC CE, from the QCLs semi-statically configured through RRC signaling. For the QCL for one or more antenna points, selection may be made, by using the MAC CE, from the QCLs semi-statically configured through RRC signaling, and further selection may be made, by using DCI, from the QCLs selected by using the MAC CE.

According to the method for configuring the TCI state (QCL) in the first embodiment, communication can be appropriately performed even in a case where there is a long physical distance between the antenna points.

At least one of the UE and the NW may dependently execute signal processing (for example, precoding and the like) on each of the antenna points included in one antenna group. At least one of the UE and the NW is required to execute transmission and reception processing based on the antenna points included in the antenna group and having different phases. For execution of such transmission and reception processing, the channel state (including a phase difference) between the UE and each antenna point is preferably recognized.

For example, the UE may transmit the UL reference signal (RS) (for example, the SRS), and the NW may measure channel state information (CSI) based on the reference signal. In this case, the NW can perform suitable measurements of the channel including measurement of a phase difference for each antenna point.

For example, in a case where CSI is measured by using the DL RS, the UE may perform the CSI measurement based on a new CSI codebook for which signal phase differences among the antenna points are taken into account. In other words, the UE may execute signal processing on the DL signal received from each antenna point based on the newly specified codebook. For example, the UE may reference a codebook for a single panel to perform CSI measurement on a plurality of panels assuming that one panel corresponds to one antenna point. Note that the plurality of panels may be non-coherent with respect to one another.

Note that in the present disclosure, the CSI may be measured for each antenna point, for each antenna port, for each antenna group, or for each set of a plurality of antenna groups.

According to the CSI measurement method in the above-described first embodiment, communication can be appropriately performed taking a phase difference for each antenna point into account.

### <Second Embodiment>

The association between antenna points and antenna groups each including one or more antenna points will be described. The number of antenna points constituting the antenna group as indicated in the description below is only illustrative, and no such limitation is intended.

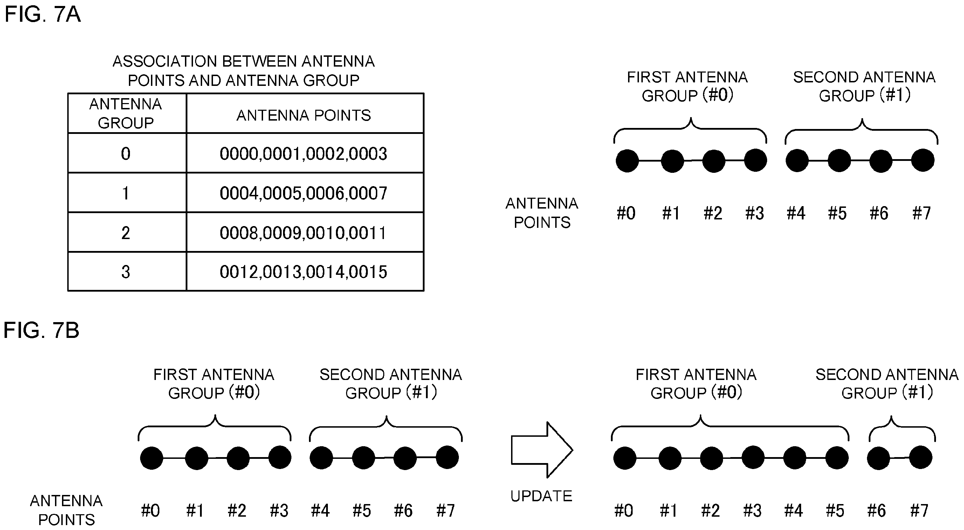

The UE may assume that antenna points and the antenna group are associated with one another based on a certain rule. The rule may be predefined in specifications. For example, X antenna points (X is an optional natural number) may be a unit for one antenna group, and the X may be defined in the specifications. For example, as shown in FIG. 7A, one antenna group may be formed for every four antenna points.

The UE may assume that the antenna points and the antenna groups are associated with one another (at least one of reporting, configuration, update, activation, and deactivation is performed) through higher layer signaling, physical layer signaling, or a combination thereof. This enables flexible communication control depending on the distribution of a plurality of UEs, a traffic volume, and the like.

For example, as shown in FIG. 7B, the association between the antenna points and the antenna groups may be updated through higher layer signaling, physical layer signaling, or a combination thereof.

Note that the antenna points included in the antenna group need not be consecutive. Note that, for example, the antenna points included in the antenna group may be reported to the UE.

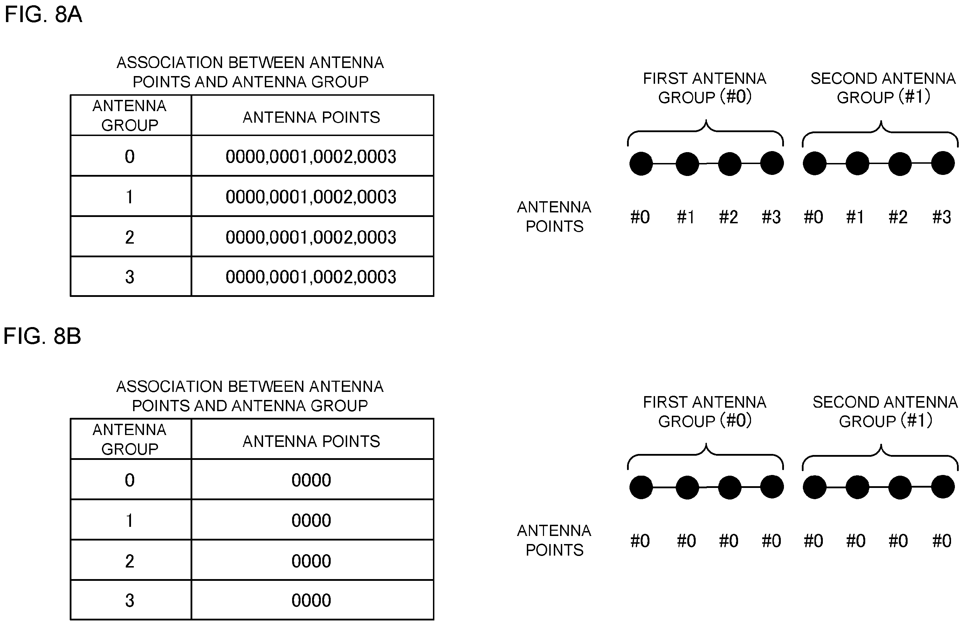

Note that the numbers of the antenna points (IDs or indexes) may be local numbers within each antenna group. For example, as in the example shown in FIG. 8A, the numbers of the antenna points (in this case, #0 to #3) may be set in order of increasing number within each antenna group. The numbers of the antenna points may be common to the antenna groups. In this case, the numbers of the antenna points constituting each antenna group may be the same or may vary among the antenna groups. For example, as in the example shown in FIG. 8B, an identical number (in this case, #0) may be set for the different antenna groups.

Note that "order of increasing" as used herein may be replaced with "order of decreasing."

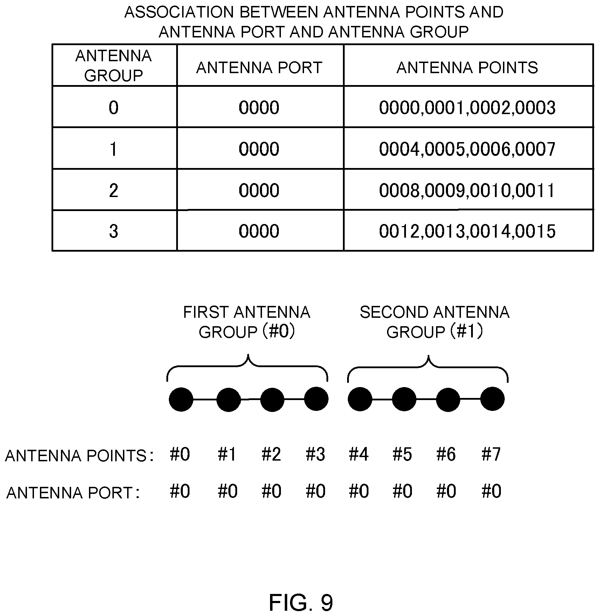

Configuration (or specification or indication) may be provided for the association between antenna points corresponding to physical antenna elements (or a plurality of sets of physical antenna elements) and antenna ports in units of signal processing. For example, as shown in an example in FIG. 9, numbers may be configured that associate the antenna points included in a first and a second antenna groups and the antenna ports in units of signal processing.

The association between the antenna points and the antenna groups may be clearly reported to the UE through higher layer signaling, physical layer signaling, or a combination thereof.

For example, the association among the antenna points, the antenna ports, and the antenna groups may be reported to the UE through higher layer signaling (for example, RRC signaling MAC CE).

For the association among the antenna points, the antenna ports, and the antenna groups, a plurality of associations may be clearly reported to the UE higher layer signaling (for example, RRC signaling MAC CE). The UE may determine one of the plurality of associations based on the DCI. The DCI may be used to schedule control channels/shared channels and may include an indication field specified in the DCI and related to the association among the antenna points, the antenna ports, and the antenna groups. The indication field may have a size of Ceil(log2(M)) bits. In this regard, M may be the number of candidates reported to the UE through higher layer signaling (or the number of the associations configured for the UE). Note that Ceil(X) as used herein may mean a ceiling function of X.

The association among the antenna points, the antenna ports, and the antenna groups may be implicitly determined by the UE.

For example, the association among the antenna points, the antenna ports, and the antenna groups may be implicitly determined by the UE based on the DCI (or the PDCCH on which the DCI is transmitted). A physical resource for the DCI may be at least one of a time resource, a frequency resource, a control channel element (CCE) index, a search space index, a control resource set (CORESET) index, and an aggregation level. For example, the UE may assume that the value related to the association among the antenna points, the antenna ports, and the antenna groups and indicated by the NW is the remainder of division of the CCE index (or the value of the aggregation level or a value resulting from division of the CCE by the aggregation level) by a certain integer.

For example, the UE may assume that the antenna points, the antenna ports, and the antenna groups in a data schedule based on the DCI are determined based on the association among the antenna points, the antenna ports, and the antenna groups in the DCI. For example, the UE may assume that the association among the antenna points, the antenna ports, and the antenna groups in the DCI is equal to the association among the antenna points, the antenna ports, and the antenna groups in the data schedule based on the DCI. For example, the UE may apply a certain transformation formula to the association among the antenna points, the antenna ports, and the antenna groups in the DCI to determine the association among the antenna points, the antenna ports, and the antenna groups in the data schedule based on the DCI.

For example, the UE may assume that the antenna points, the antenna ports, and the antenna groups in the data schedule based on the DCI are determined based on the TCI state in the DCI (or the PDCCH on which the DCI is transmitted).

Note that the association between the antenna points and the antenna groups described in the second embodiment may be the same or may vary between the uplink and the downlink. For the association, configuration, activation, determination, or the like may be performed for each channel and for each reference signal, or common configuration, activation, determination, or the like may be performed for a plurality of channels/reference signals.

According to the second embodiment, the UE can perform appropriate communication based on the association among the antenna points, the antenna ports, and the antenna groups.

The association between the antenna ports and the antenna groups may be configured/reported/specified for each of a first region and a second region described below. In other words, the association between the antenna ports and the antenna groups may vary between the first region and the second region.

### <Third Embodiment>

The UE receives a first channel/signal in a first region (first resource region) and receives a second channel/signal different from the first channel/signal in a second region (second resource region) different from the first region. The UE assumes that the first region is a common resource region used for a plurality of antenna groups and that the second region is a region for resources independently used for the respective plurality of antenna groups. Note that each of the resources may be at least one of a time resource and a frequency resource. The above-described signal may be a reference signal (RS). "Common" may be replaced with "identical." "Signal" and "channel" as used herein may be replaced with each other. The "signal" may be replaced with, for example, a "downlink signal" or an "uplink signal," and the "channel" may be replaced with a "downlink channel" or an "uplink channel."

The first channel/signal may also be referred to as an antenna group-common channel/signal. The second channel/signal may also be referred to as an antenna-independent (or-specific) channel/signal.

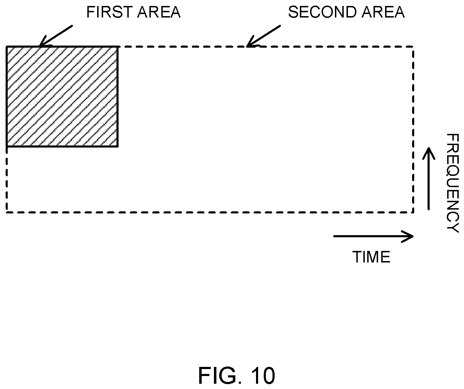

FIG. 10 is a diagram to show an example of the first region and the second region. As shown in FIG. 10, the first region and the second region are regions based on time and frequency. The range (position) of the first region and the range (position) of the second region may be defined in the specifications or reported to the UE by using cell information (or information related to the cell)/notification information or reported to the UE by using higher layer control information/physical layer control information or reported to the UE by using higher layer data/physical layer data/shared channel.

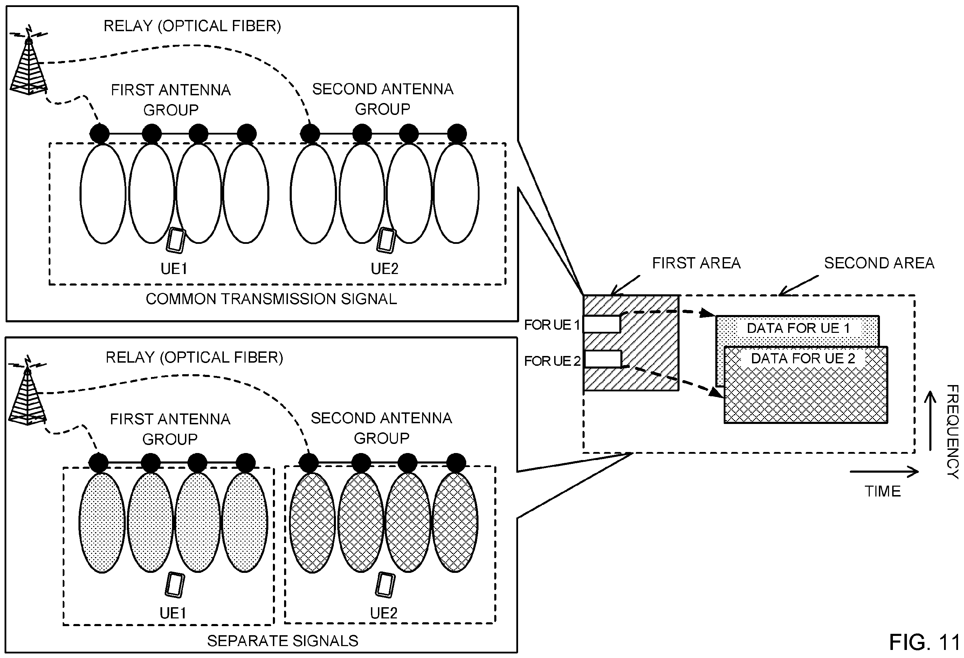

FIG. 11 is a diagram to show an example of allocation of resources to a plurality of user terminals. In the example shown in FIG. 11, the first region is allocated a resource for the control channel/RS for UE 1 and a resource for the control channel/RS for UE 2. The second region is allocated a resource for the data channel/RS for UE 1 and a resource for the data channel/RS for UE 2.

The first region is applied to the resource for the control channel/RS to allow for reliable communication based on a spatial diversity effect. In the second region, spatial multiplexing may be employed. This enables an increase in frequency domain utilization efficiency. Control may be performed such that only one of the first region and the second region is used for each channel/signal (for example, method 1-1 described below). Control may be performed such that a certain channel/signal uses both the first region and the second region for the respective purposes (for example, methods 1-2 and 1-3 described below).

### [Method 1-1]

The UE needs to have high reliability, and may receive, in the first region, a DL control channel (for example, the PDCCH (Physical Downlink Control Channel)/DL control signal and a notification channel/notification signal that are required to have high reliability but that use only a small amount of resources, and receives, in the second region, UE-specific (transmitted for each UE) data channels/data signals that use a large amount of resources.

### [Method 1-2]

The UE may receive, in the first region, a DL control channel/DL control signal common to the UEs (common to all of the UEs within the cell, received in a common search space) or to some of the UEs within the cell (received in a group common search space). The UE may receive UE-specific DL control channels/DL control signals (received in UE specific search spaces) in the second region. The UE need not receive, from the network, an explicit report of the range (position) of the first region and the range (position) of the second region. At this time, the UE may receive the channels/signals by assuming the first region as a reception/monitor resource (search space or monitoring occasion) for the DL control channel/DL control signal common to the UEs (common to all of the UEs within the cell, received in the common search space) or to some of the UEs within the cell (received in the group common search space), and determining the UE-specific DL control channels/DL control signals (received in UE specific search spaces) to correspond to the second region.

### [Method 1-3]

The UE may receive, in the first region, a DL data channel/DL data signal such as a DL control channel/DL control signal common to all of the UEs within the cell (the data channel received in a common search space) or a DL data channel/DL data signal common to a plurality of UEs within the cell (the data channel received in the group common search space). The UE may receive UE-specific DL control channels/DL control signals in the second region. The UE need not receive, from the network, an explicit report of the range (position) of the first region and the range (position) of the second region. At this time, the UE may receive the channels/signals by assuming the first region as a reception resource for the DL control channel/DL control signal common to the UEs, and determining a reception resource for the UE-specific DL control channels/DL control signals to be the second region. The reception of the DL data channel/DL data signal/DL RS and the like (that may simply be represented as the reception) as used herein may be replaced with the transmission of the UL data channel/UL data signal/UL RS and the like (that may simply be represented as the transmission). The DL data channel/DL data signal common to the UEs may include a notification channel/notification signal.

Note that the "region" as used herein may be replaced with a "resource, resource group, resource set, and so on. At least one of the time/frequency/code/sequence/cyclic shift of the first region may be different from the time/frequency/code/sequence/cyclic shift of the second region. A physical channel that can be transmitted/received in the first region may be different from a physical channel that can be transmitted/received in the second region.

### [QCL Configuration]

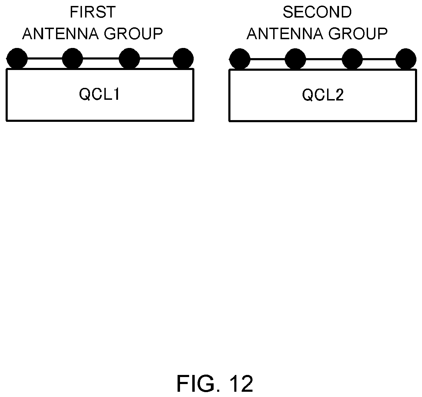

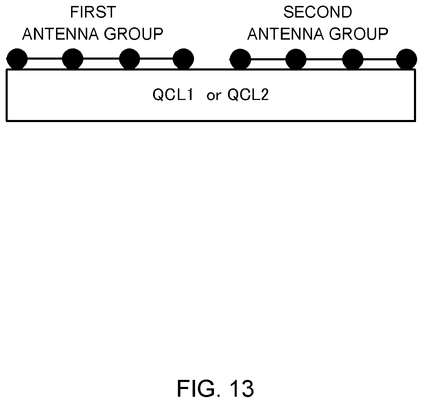

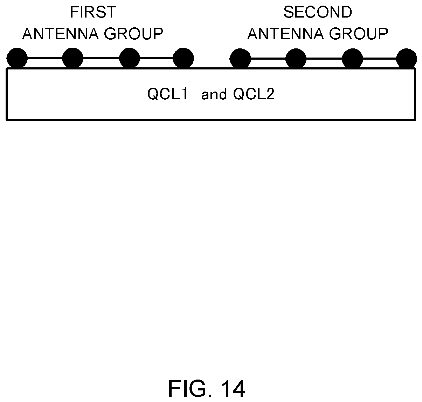

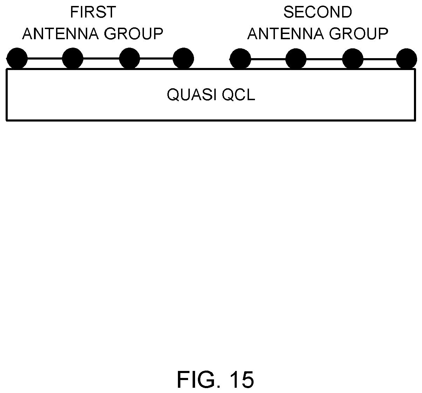

The QCL configuration for the first region and the second region will be described below. The UE may assume that the QCL configuration for the first region is different from or the same as the QCL configuration for the second region.
(1) The UE may assume that QCL is configured individually for each of the first antenna group and the second antenna group. FIG. 12 is a diagram to show a first example of the QCL configuration. In the example shown in FIG. 12, QCL 1 is configured for the first antenna group, whereas QCL 2 is configured for the second antenna group. QCL 1 may be different from QCL 2.
(2) The UE may assume one of a plurality of QCL candidates for the first antenna group and the second antenna group, and receive the channel/signal in the first region/second region. The plurality of QCL candidates may be configured for the UE through higher layer signaling or the like. FIG. 13 is a diagram to show a second example of the QCL configuration. In FIG. 13, the UE assumes QCL 1 or QCL 2 for the first antenna group and the second antenna group. The number of QCLs assumed is not limited to two but may be three or more.
   The UE may autonomously select, from a plurality of QCL candidates to be configured, one QCL utilized for reception in the first region/second region or may receive an explicit/implicit indication of the QCL from the network. The UE may select the QCL to be configured, based on at least one of the power of the channel/signal received and the measured quality of the channel.
(3) The UE may assume a plurality of QCL candidates for the first antenna group and the second antenna group, and receive the channel/signal in the first region/second region. FIG. 14 is a diagram to show a third example of the QCL configuration. In FIG. 14, the UE assumes both QCL 1 and QCL 2 for the first antenna group and the second antenna group. The number of QCLs assumed is not limited to two but may be three or more.
(4) The UE may assume quasi (or virtual) QCL in which both the first antenna group and the second antenna group are assumed. FIG. 15 is a diagram to show a fourth example of the QCL configuration. In FIG. 15, the UE assumes quasi QCL for the first antenna group and the second antenna group (in other words, the UE executes reception processing based on the quasi QCL, for both the first antenna group and the second antenna group).

The UE may be configured with the quasi QCL by the network. The UE may derive (determine) the quasi QCL to be applied to each antenna group based on the QCL information configured for the antenna group. The quasi QCL may be defined in the specifications.

For example, it is assumed that SSB #1 is QCL information regarding antenna group #1, whereas SSB #3 is QCL information regarding antenna group #2 (a case of such a configuration is considered). In this case, the UE may determine SSB #1 of the antenna group #1 as quasi QCL. Alternatively, the UE may determine SSB #3 of the antenna group #2 as quasi QCL.
Alternatively, the UE may determine an intermediate value between the QCL information regarding antenna group #1 and QCL information regarding antenna group #2 and determine SSB #2 as quasi QCL.

The network may report/configure, to/for the UE, a relation between the quasi QCL and a combination of pieces of QCL information regarding the antenna groups. The UE may determine the quasi QCL based on the relation reported/configured. Note that a plurality of the relations may be reported/configured.

For example, the network may report, to the UE, the relation that "in a case where SSB #1 is the QCL information regarding the antenna group #1 and SSB #1 is the QCL information regarding the antenna group #2, SSB #1 is the quasi QCL," the UE may determine the quasi QCL based on the relation reported (and the QCL information regarding each antenna group).

### [QCL Reporting Method]

(1) The network may explicitly report the QCL configured for each antenna group, to the UE by using higher layer control information/physical layer control information. For example, data scheduling QCL (for example, the QCL applied to the PDSCH/PUSCH) may be indicated by the network by using scheduling DCI.
(2) The QCL configured for each antenna group may be implicitly reported to the UE by the network. For example, the QCL configured for each antenna group may be implicitly reported (determined) by using physical resources (time/frequency/control channel element (CCE) index/search space index/CORESET ID/aggregation level) in the DCI (PDCCH).

For example, the UE may assume that the value implicitly reported from the network (the value corresponding to the QCL) is the remainder of division of the CCE index (or the value of the aggregation level or a value resulting from division of the CCE by the aggregation level) by a certain integer. The data scheduling QCL may be implicitly reported in association with (in correspondence with) the antenna points/antenna ports/antenna groups in the DCI (PDCCH).

The data scheduling QCL may be implicitly reported in association with (in correspondence with) the QCL/TCI state in the DCI (PDCCH). For example, the UE may assume that the QCL in the DCI (PDCCH) is the same as the QCL in the data schedule. For example, the UE may assume that the antenna points/antenna ports/antenna groups may be determined from the QCL in the DCI (PDCCH) by using a transformation formula.

### [Modified Examples)

A third region refers to a portion of the second region that overlaps the first region in terms of at least one of time, frequency, code, space, and beam. The third region has requirements for reception of channels/signals (reception is difficult).

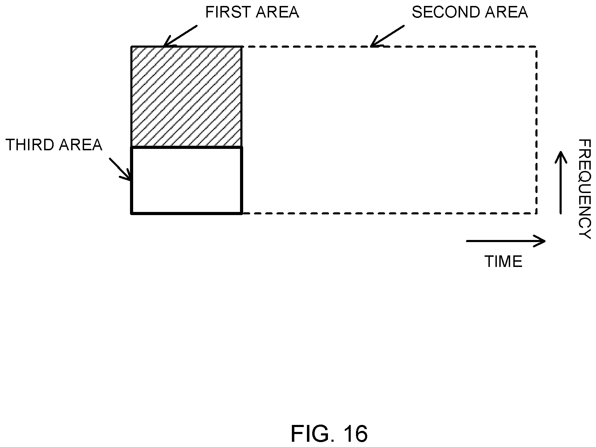

FIG. 16 is a diagram to show a second region (third region) overlapping the first region in terms of time resources. In the example shown in FIG. 16, channels/signals in different regions need to be received at the same point in time. For example, in a case where a beam used for the first region is different from a beam used for the second region, the UE needs to simultaneously receive two or more beams. Even with a common beam, the UE needs to simultaneously execute processing such as channel estimation, demodulation, and decoding in parallel, leading to demanding requirements for reception by the UE.

Accordingly, whether the channel/signal received in the second region can be received in the third region may be determined according to a report of UE category dependence or UE capability. In a case of failing to receive, in the third region, a channel/signal received in the second region, the UE may report the failure and need not assume that the channel/signal is not received in the third region. The UE may receive the channel/signal included in the third region by using a reception property (for example, a reception beam) of the first region. The channel/signal may be, for example, a data channel/data signal.

### [Miscellaneous]

(1) In the first region, UE multiplexing (mapping) may be performed by using time resources/frequency resources/code resources. In the second region, UE multiplexing may be performed based on a space/antenna group. In a case where multiplexing based on a space/antenna group, the UE receives a channel/signal in an identical time resource/identical frequency resource/identical code resource.
(2) The UE may receive a report of information related to UE multiplexing with another UE (UE multiplexing information). The UE multiplexing information may correspond to information related to a signal directed to another UE and transmitted in a resource for a signal directed to the subject UE. The UE multiplexing information may include at least one of, for example, whether UE multiplexing is performed, a resource for another UE, the radio network temporary identifier (RNTI)/UE ID/virtual cell ID of such another UE, and so on. The UE multiplexing information may be reported to the UE by using higher layer signaling, DCI, or the like. The UE may receive, in the first region, a report of schedule information regarding another UE or the like. The UE may receive, in the second region, a report of schedule information regarding another UE or the like. The UE may control transmission/reception processing based on the schedule information regarding another UE (for example, rate matching may be applied to a resource for the subject UE around a resource for another UE.
   The UE may receive an explicit or implicit report of UE multiplexing information regarding another UE. For example, the UE may receive an implicit report of UE multiplexing information depending on whether a comb resource for the DMRS that is not used as the DMRS is used for data mapping of the UE itself (the number of DMRS CDM groups with no data = 1) or remains blank (the number of DMRS CDM groups with no data ≠ 1) (for example, multiplexing is not performed in the former case and is performed in the latter case). The UE may receive a report of information indicating whether the UE is multiplexed with another UE in an identical time/identical frequency resource.
(3) For channel mapping, different time resources/frequency resources or the same time resource/frequency resource may be used for the first region and the second region. The range (position) of the first region/second region may be determined based on a certain rule. The range (position) of the first region/second region may be determined, for example, based on a rule in which leading n symbols (for example, n = 3) within the slot are allocated to the first region, with the other symbols allocated to the second region. The certain rule may be reported by using a higher layer/physical layer. For example, the n may be determined through higher layer signaling, physical layer signaling, or a combination thereof.

According to the present embodiment, the UE receives, in the first region, the DL control channel or the like that requires high reliability but that uses only a small amount of resources, thus allowing avoidance of a failure in reception. The UE-specific data channel or the like that uses a large amount of resources is received in the second region by utilizing spatial multiplexing, enabling an increase in frequency utilization efficiency.

### <Fourth Embodiment>

In a case where estimation of position of the UE fails, the appropriate antenna group (near the UE) may fail to be selected for the UE. In that case, the UE can receive the channel/signal in the first region (for example, the control channel/control signal), but may fail to appropriately receive the channel/signal in the second region (for example, the data channel/data signal). For example, the UE can receive the control channel to recognize that the data has been scheduled, but may fail in appropriate reception (decoding) of the data.

Thus, the UE may transmit a retransmission instruction (HARQ-NACK) to the network based on a reception status of the data channel (PDSCH) and receive, through the network, the data channel retransmitted from an antenna group different from the source antenna group having transmitted the data channel. The reception status may be, for example, whether reception has normally succeeded or whether decoding of data is enabled. The data channel may be a channel/signal other than the data channel.

### [Method 2-1]

The UE may transmit the retransmission instruction (HARQ-NACK) to the network based on the reception status of the data channel (PDSCH) and transmit, to the network, a request to change the source antenna group for the data channel.

The UE may transmit, in a certain bit field of the PUCCH, a request to change the source antenna group for the data channel. Alternatively, the UE may transmit the request to change the source antenna group for the data channel, as one state of ACK/NACK (as one state, on an I/Q plane, of Quadrature Phase Shift Keying (QPSK)/Binary Phase Shift Keying (BPSK) modulation or as one sequence in a case of transmission of a sequence selection

### ACK/NACK).

The network receives the request to change the source antenna group for the data channel from the UE and then when retransmitting the data channel, transmits the data channel from an antenna group different from the antenna group used during the last transmission. The UE assumes that the data channel is received from an antenna group different from the last source antenna group. Note that in a case where the QCL/TCI state varies with antenna group, the UE assumes a different QCL/TCI state each time the antenna group is changed.

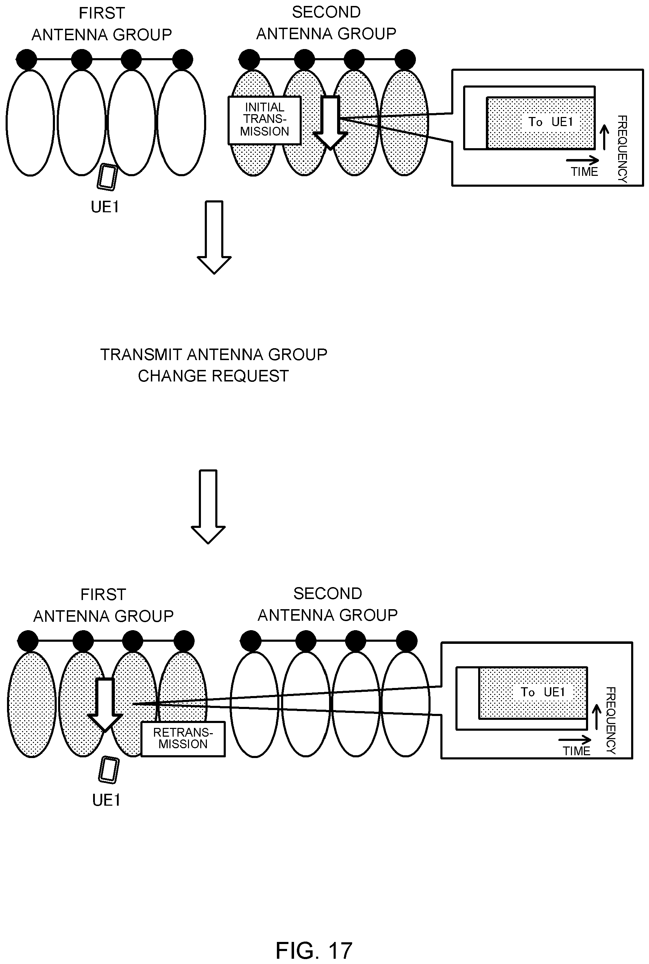

FIG. 17 is a diagram to show a first example in which the antenna group is changed. In FIG. 17, the UE receives a first data channel from a second antenna group. It is assumed at this time, reception (decoding) of data has not been appropriately performed. The UE transmits the retransmission instruction to the network and transmits, to the network, the request to change the source antenna group for the data channel. Then, the UE receives the data channel retransmitted from a first antenna group. Unlike the resource for the first data channel, the resource for the data channel retransmitted is transmitted in a scheduled resource, allowing the UE to appropriately receive data.

The UE may determine, as a "desired antenna group," an antenna group determined to have the highest received power/reception quality when channels/signals (for example, RSs) from the antenna groups are measured for received power/reception quality. For example, the UE determines, as the "desired antenna group," the antenna group determined to have the highest received power/reception quality when the channels/signals received in the first region may be measured. The UE may determine the "desired antenna group" by using another method implemented in the UE. The UE may include the "desired antenna group" determined in the request to change the source antenna group (for example, the request to change may indicate the index of the "desired antenna group"). In a case of two antenna groups (in a case where one antenna group can be change), the UE need not transmit the "desired antenna group."

Thus, after a data channel is transmitted from an inappropriate antenna/antenna group due to a failure in position estimation or the like, the UE can receive the data channel retransmitted from the appropriate antenna/antenna group.

### [Method 2-2]

When transmitting the retransmission instruction (HARQ-NACK) to the network based on the reception status of the data channel (PDSCH), the UE need not transmit, to the network, the request to change the source antenna group for the data channel. The network determines the antenna group for retransmission based on the received power/reception quality for each antenna group (when one or more antenna groups receive the retransmission instruction for the data channel transmitted by the network) for the retransmission instruction. Then, the UE may receive the data channel retransmitted from the antenna group determined. "Received power/reception quality" and "measurement result" as used herein may be replaced with each other.

For example, in a case where the UE receives the HARQ-NACK for the initially transmitted data channel, the network (base station) compares the received power of the PUCCH, the DMRS, or the like among the antenna groups to determine that the UE is present near the antenna group with the highest received power. Then, the antenna group retransmits the data channel and the like to the UE.

In a case where the QCL/TCI state/spatial relation varies with antenna group, the UE may transmit the NACK in accordance with the QCL/TCI state/spatial relation corresponding to the "desired antenna group" described above.

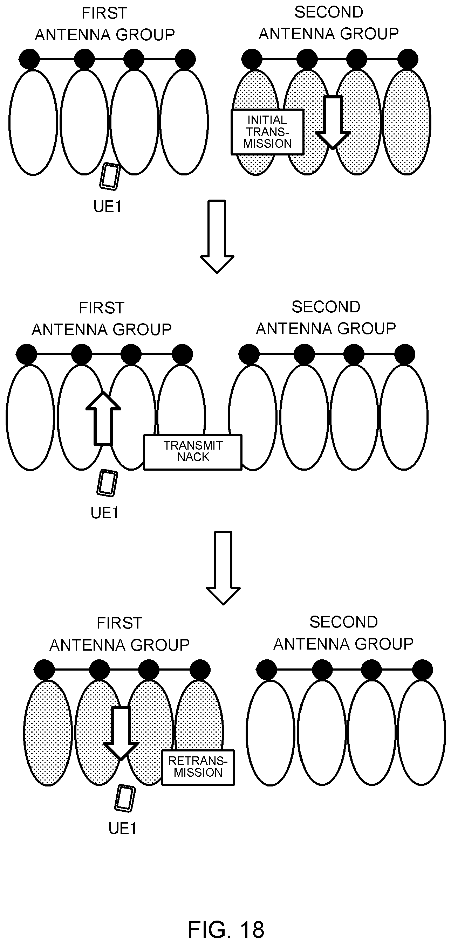

FIG. 18 is a diagram to show a second example in which the antenna group is changed. In FIG. 18, the UE receives the first data channel from the second antenna group. It is assumed at this time, reception (decoding) of data has not been appropriately performed. The UE transmits the retransmission instruction (HARQ-NACK) to the network. The network compares the received power/reception quality of the PUCCH, the DMRS, or the like among the antenna groups to determine that the UE is present near the antenna group with the highest received power/reception quality, and performs retransmission from the first antenna group. Then, the UE receives the data channel retransmitted from the first antenna group.

### [Method 2-3]

In a case of receiving data channels from a plurality of antenna groups, the UE determines the antenna group intended for a retransmission instruction ("desired antenna group" described above) based on the received power/reception quality for each of the source antenna groups for the data channels received. Then, the UE uses the HARQ-NACK resource (PUCCH resource/PUSCH resource) corresponding to the antenna group intended for the retransmission instruction to transmit the retransmission instruction (HARQ-NACK) to the network. In this case, the UE need not transmit the request to change the source antenna group for the data channel. Then, the UE receives (assumes to receive) the data channel retransmitted from the antenna group intended for the retransmission instruction.

A number of NACK resources are configured that correspond to the antenna groups configured/reported, and the UE may transmit the NACK in a NACK resource corresponding to the desired antenna group. The UE may receive a report of two NACK resources corresponding to the presence/absence of a request to change the antenna group. In a case where the presence of the request to change the antenna group is reported, the UE may assume that the antenna group for retransmission is different from the last source antenna group, and blindly detect which antenna group performs the transmission.

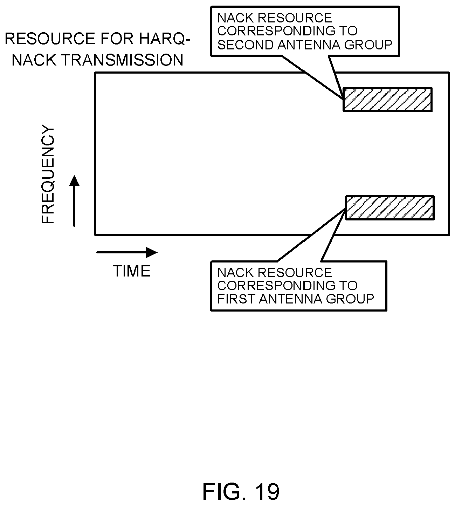

FIG. 19 is a diagram to show a configuration example of NACK resources. As shown in FIG. 19, two NACK resources are assumed to be specified; one of the NACK resources corresponds to the first antenna group, and the other NACK resource corresponds to the second antenna group. In a case where the first antenna group is the desired antenna group, the UE transmits the NACK by using the NACK resource corresponding to the first antenna group. A configuration example of the NACK resources is not limited to the example in FIG. 19. Instead of the time/frequency resource, resources such as code/sequence/orthogonal cover code (OCC)/cyclic shift (CS) may be configured for each antenna group.

Whether the data channel received by the UE is initially transmitted or retransmitted may be indicated by using an NDI (New Data Indicator) or the like during scheduling in the control channel.

According to the present embodiment, even in a case of failing to estimate the position of the UE, the network can receive the data channel retransmitted from the appropriate antenna group (near the UE). According to method 2-2 and method 2-3, even with the lack of transmission of the request to change the source antenna group, the data channel retransmitted from the appropriate antenna group can be received.

Note that the HARQ-NACK in the fourth embodiment may be replaced with the HARQ-ACK, ACK/NACK, and so on.

### <Fifth Embodiment>

The UE receives, from one or more antenna groups, at least one of a plurality of pieces of DCI for scheduling a plurality of data with the same content, and assumes that each of the plurality of data has been scheduled independently for each antenna group. The data may be transmitted in the second region. The data as used herein may be replaced with a CW (Codeword)/TB (Transport Block). The data may be "DL data" or "UL data."

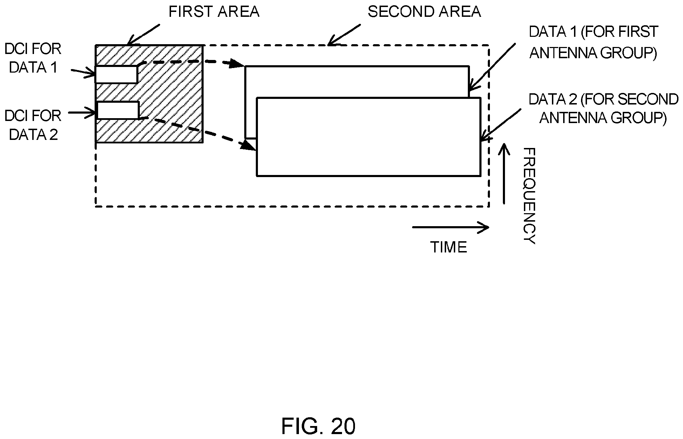

FIG. 20 is a diagram to show an example in which data from a plurality of antenna groups are scheduled in the second region. In FIG. 20, DCI for data 1 and DCI for data 2 are each allocated in the first region. In the second region, a resource for data 1 transmitted from the first antenna group and a resource for data 2 transmitted from the second antenna group are each allocated. Data 1 and data 2 are assumed to be the same data.

Note data 1 and data 2 may be the same data/CW/TB but may be different data/CWs/TBs (for example, data 1 and data 2 partly include the same data and are generally different data). The number of physical resources for each data (the number of REs (Resource Elements) or the number of PRBs (physical resource blocks)) may be the same or may vary.

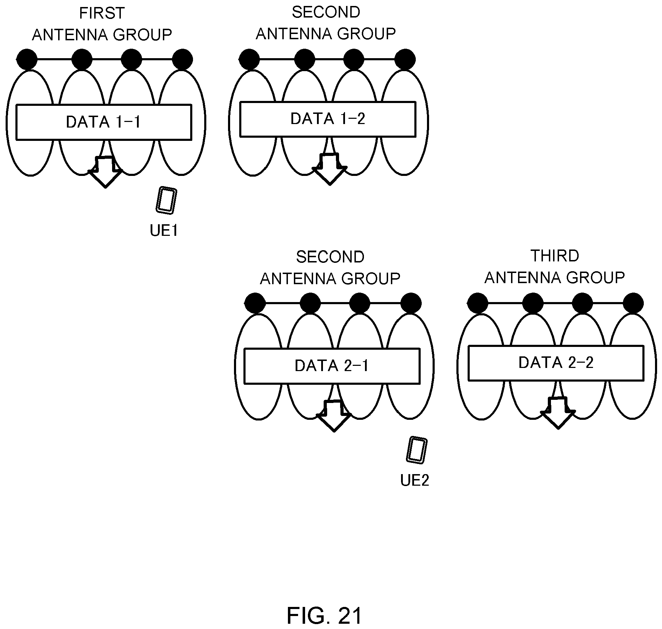

FIG. 21 is a diagram to show an example in which a plurality of antenna groups transmit data to a plurality of UEs. In FIG. 21, UE 1 receives data 1-1 from the first antenna group and data 1-2 (identical to data 1-1) from the second antenna group. UE 2 receives data 2-1 from the second antenna group and data 2-2 (identical to data 2-1) from the third antenna group.

In FIG. 21, transmission of each data is scheduled independently for each antenna group. Thus, for example, the second antenna group can appropriately distribute resources between data 1-2 for UE 1 and data 2-1 for UE 2.

### [Method 3-1]

The UE may receive a plurality of pieces of DCI for scheduling in the first region, select DCI to be used from the plurality of pieces of DCI, and receive data scheduled in accordance with the selected piece of DCI. Note that the DCI as used herein may be replaced with the control channel/control signal.

Each piece of the data scheduling DCI may be issued to each antenna group, and orthogonalized in space/time/frequency/code/RNTI. The UE may measure the received power/reception quality of each piece of DCI (or the DMRS corresponding to the piece of DCI), select DCI with high received power/reception quality, and receive data from some of the antenna groups (the antenna groups corresponding to the selected DCI).

Note that the UE may determine which antenna group is used for data scheduling, from measurement of the received power/quality of the DCI received in the first region. The UE may or may not report the antenna group determined or the measurement result for the received power/quality to the network. In a case of receiving the report, the network transmits data only from the antenna group based on the report, enabling an increase in communication efficiency.

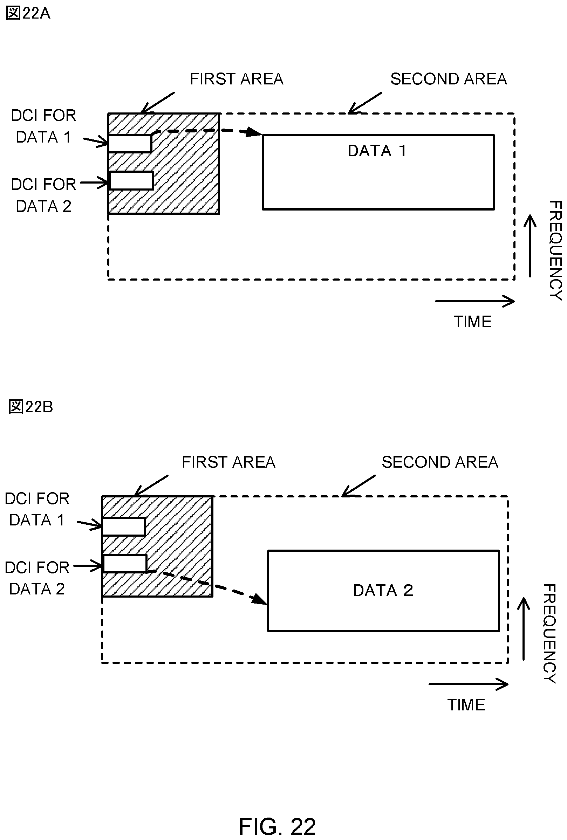

FIGS. 22A and 22B are diagrams to show an example in which DCI is selected based on received power. FIG. 22A and FIG. 22B assume that the first region is a region used by the first antenna group and the second antenna group and that the second region is a region used independently by the first antenna group and the second antenna group. UE 1 near the first antenna group measures the received power of each piece of DCI and determines that the DCI for data 1 has higher received power than DCI for data 2. In this case, UE 1 selects the DCI for data 1 with higher received power, while discarding (or ignoring) the DCI for data 2.

In FIG. 22B, UE 2 near the second antenna group measures the received power of each piece of DCI and determines that the DCI for data 2 has higher received power than DCI for data 1. In this case, UE 2 selects the DCI for data 2 with higher received power, while discarding (or ignoring) the DCI for data 1.

### [DCI Selection Method 1]

In selecting the DCI, the UE may select the DCI to be used based on the measurement results for the received power/reception quality of the RS associated with/corresponding to each of one or more pieces of DCI received (for example, a synchronization signal block (SSB)/channel state information reference signal (CSI-RS)/tracking CSI-RS (also referred to as a tracking reference signal (TRS))/demodulation reference signal (DMRS). For example, the UE may select the DCI associated with/corresponding to the RS with the highest received power/reception quality or the DCI associated with/corresponding to top N RSs in order of decreasing received power/reception quality. N may be reported through higher layer signaling. In a case where N is not reported, N = 1 may be configured.

The associated/corresponding RS may be configured for each piece of DCI or for each detection resource (search space) for the DCI. The RS associated with/corresponding to the DCI may be replaced with the RS in a QCL relation with the DCI.

In DCI selection method 1, the power/quality of the RS is used to select the DCI, and thus the first region allows the same DL signal to be transmitted from each antenna group at equal power. In other words, the network does not need to execute signal processing on different frequency domains for respective antenna groups, and may transmit the same DL signal. Accordingly, the apparatus of the network can be simplified. By transmitting a plurality of pieces of DCI at the same power in an overlapping manner, the reliability of the first region can be improved.

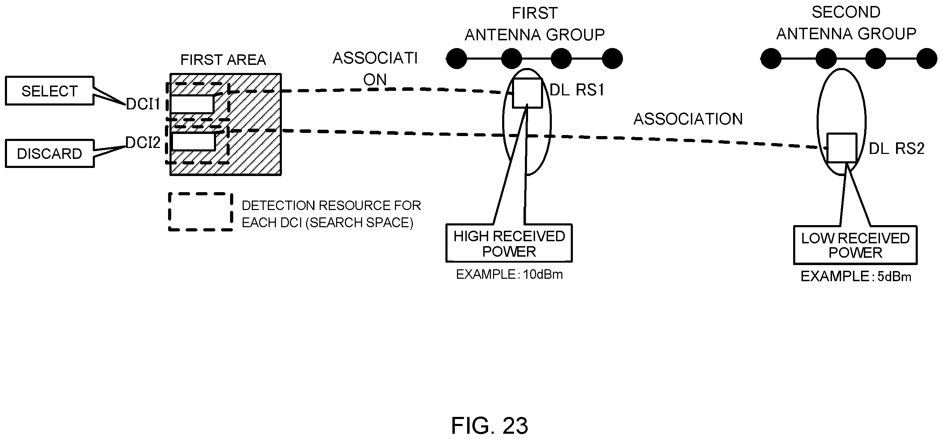

FIG. 23 is a diagram to show an example in which the DCI is determined based on the measurement of the received power of the RS. In FIG. 23, DL RS 1 transmitted from the first antenna group is associated with DCI 1. DL RS 2 transmitted from the second antenna group is associated with DCI 2. DL RS 1 is assumed to have higher received power than DL RS 2. In this case, the UE selects DCI 1 associated with DL RS 1 with higher received power.

### [DCI Selection Method 2]

In selecting the DCI, the UE may measure the received power/reception quality of each of one or more pieces of DCI received and select the DCI based on the measurement results for the received power/reception quality. For example, the UE may select the DCI with the highest received power/reception quality or top N pieces of DCI in order of decreasing received power/reception quality. N may be reported through higher layer signaling. In a case where N is not reported, N = 1 may be configured.

In the first region, the resource for each piece of DCI is common to the antenna groups. However, each of the antenna groups actually transmitting the DCI may independently transmit the DCI. For example, the first antenna group transmits DCI 1, whereas the second antenna group transmits DCI 2. Antenna group 1 may transmit DCI 1 at power higher than the power for DCI 2, whereas antenna group 2 may transmit DCI 2 at power higher than the power for DCI 1. Accordingly, the pieces of DCI transmitted by the respective antenna groups vary in received power.

DCI selection method 2 requires no RS corresponding to each piece of DCI, enabling a reduction in RS overhead.

### [DCI Selection]

The data scheduling DCI received in the first region may be associated with the groups. In a case of detecting a plurality of pieces of DCI in an identical symbol or a certain time/frequency/code domain within an identical group, the UE may select the DCI used for data scheduling based on the measurement results in DCI selection method 1 or DCI selection method 2. In a case where some or all of the data channels/signals (for example, the PDSCH) scheduled by the respective pieces of DCI overlap, the DCI used for data scheduling may be selected based on the measurement results in DCI selection method 1 or DCI selection method 2. Note that the group may be replaced with a set, an intended purpose, or a unit.

In the present disclosure, in a case of selecting the DCI (will or choice), the UE may receive/transmit data scheduled by using the DCI selected, while not receiving/transmitting data scheduled by using the DCI not selected (the DCI discarded).

### [Association between Groups and DCI]

B using higher layer control information/notification information or the like, the UE may receive a report of information related to the association between belonging groups and DCI. The association between the group and the DCI may be defined in the specifications. Information related to the association between the group and the DCI may be, for example, the number of pieces of DCI included in the belonging group, the resource for the DCI (for example, CCE/time/frequency resources) and the like. The resource for the DCI may be reported for each piece of DCI. The group may be configured for each piece of data scheduled by using the DCI (for each data content/each data type).

The UE may detect DCI and then convert a resource for the DCI based on a certain rule to derive a resource for DCI within the group identical to the group including the DCI with the resource converted. In other words, the UE may assume that the DCI within the identical group may be detected in the derived resource.

For example, the UE detects DCI 1 and then adds/subtracts a certain offset (or a configured offset) to or from a resource in which DCI 1 has been detected (for example, a CCE/time/frequency resource) to derive a resource for DCI 2 in the same group as that which includes DCI 1. On the assumption that DCI 2 may be detected in the derived resource, the UE may perform blind detection of DCI 2.

The UE may assume that a group identifier is included in some of the bit fields in the DCI. After decoding, the UE can recognize the correspondence relation between the DCI groups from the values of the bit fields.

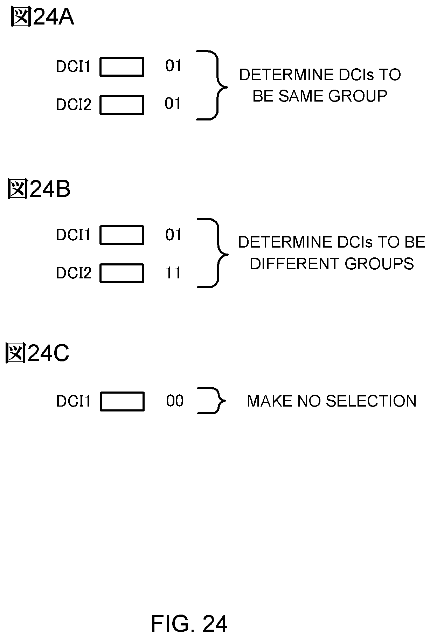

FIG. 24 is an example of the association between the DCI and groups. FIG. 24A shows an example in which an identical group identifier is configured for two pieces of DCI. In this case, the UE determines that DCI 1 and DCI 2 belong to the same group and selects one of DCI 1 and DCI 2.

FIG. 24B shows an example in which a different groups configured for two pieces of DCI. In this case, the UE may determine that DCI 1 and DCI 2 do not belong to the same group and perform data receptions/transmissions based on the respective pieces of DCI. FIG. 24C shows an example in which no group configuration is made for the DCI. In a case where a particular value (for example, "00") is configured in a bit field in the DCI indicating the group, the UE may determine that no group is configured. In this case, the UE may inevitably use the DCI without will or choice (selection or discard).

The UE may select the DCI in units of certain resource regions. Specifically, despite the presence of a plurality of pieces of DCI provided with the same group identifier, in a case where the plurality of pieces of DCI are present in different resource regions, each of the plurality of pieces of DCI may be selected.

The range (position) of the certain resource region may be reported through higher layer signaling. The certain resource region may correspond to, for example, the unit of one slot/subframe or the unit of a certain BW (bandwidth).

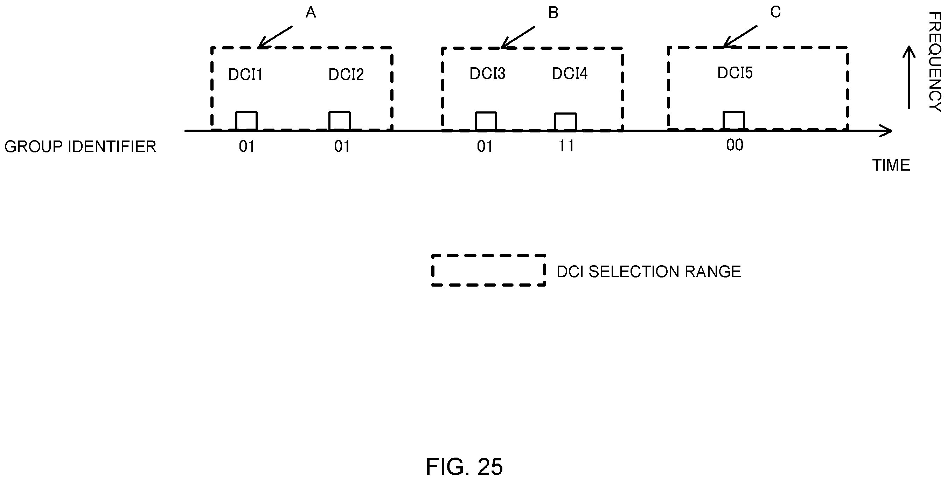

FIG. 25 is a diagram to show an example in which DCI is selected for each region. DCI 1 and DCI 2 configured with the group identifier "01" are present in a region A. DCI 3 configured with the group identifier "01" and DCI 4 configured with the group identifier "11" are present in a region B. In this case, the UE may select one of DCI 1 and DCI 2 and further select DCI 3.

DCI 5 is configured with the particular value ("00"), and thus the UE may determine that no group is configured for DCI 5. In this case, the UE may inevitably use DCI 5 without will or choice (selection or discard).

According to the fifth embodiment, a plurality of antenna groups are used for one UE to schedule identical data, allowing the UE to appropriately receive data even in a case where selection of an antenna group fails. This allows reliability to be improved. Assigning a schedule to each antenna group enables each of the resources in the antenna group to be optimized, allowing the resources to be effectively used.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

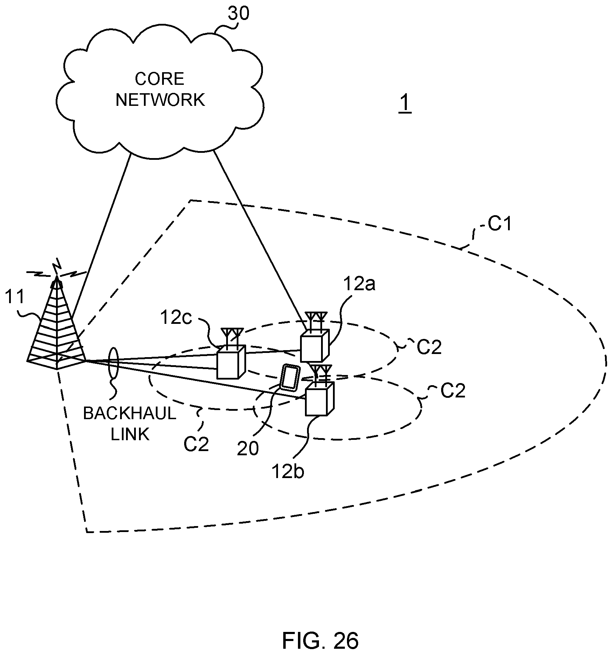

FIG. 26 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cellspecific reference signal (CRS), a channel state informationreference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

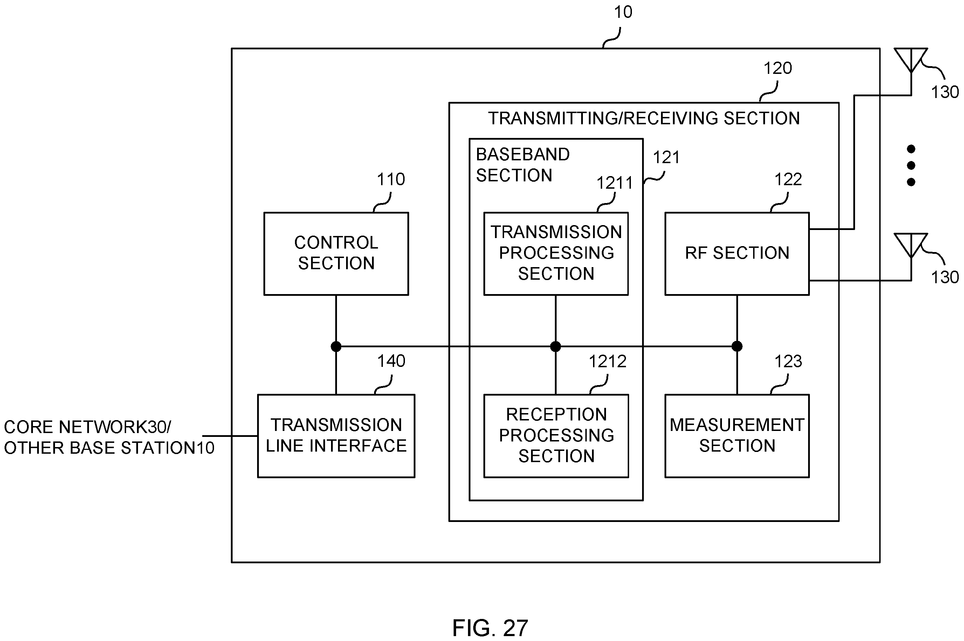

FIG. 27 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmission beam and a reception beam by using digital beam foaming (for example, precoding), analog beam foaming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analogdigital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 transmits a first signal in a first resource region and transmits a second signal different from the first signal in a second resource region different from the first region. It is assumed that the first resource region is a common resource region used for a plurality of antenna groups and that the second resource region is a region for resources independently used for the respective plurality of antenna groups. The first signal may be a control signal, and the second signal may be a terminal-specific data signal. The first signal may be a terminal-common control signal, and the second signal may be a terminal-specific control signal. The first signal may be a terminal-common data signal, and the second signal may be a terminal-specific data signal. The antenna group may correspond to the transmitting/receiving antenna 130.

Thus, the transmitting/receiving section 120 may receive a retransmission instruction from a terminal (HARQ-NACK) to the network based on a reception status of the data channel, and causes the data channel to be retransmitted from an antenna group different from the source antenna group for the data channel. The transmitting/receiving section 120 receives a request to change the source antenna group for the data channel based on the reception status of the data channel. The control section 110 determines the antenna group for retransmission based on the measurement results for each antenna group for the retransmission instruction, and the transmitting/receiving section 120 may receive the signal retransmitted from the antenna group determined. The antenna group intended for the retransmission instruction is determined by the terminal based on the measurement results for each antenna group for the retransmission instruction, and the transmitting/receiving section 120 may receive the retransmission instruction transmitted by using the resource corresponding to the antenna group intended for the retransmission instruction.

The transmitting/receiving section 120 transmits, from one or more antenna groups to the terminal, at least one of a plurality of pieces of downlink control information for scheduling a plurality of data with the same content. The control section 110 schedules each of the plurality of data independently for each of the antenna groups. The terminal may select downlink control information to be used from the plurality of pieces of downlink control information transmitted, and the transmitting/receiving section 120 transmits data to be scheduled by using the downlink control information selected. The downlink control information to be used may be selected based on the measurement results for the reference signal associated with each of the plurality of downlink control information transmitted. The downlink control information to be used may be selected based on the measurement results for each of the plurality of downlink control information transmitted.

### (User Terminal)

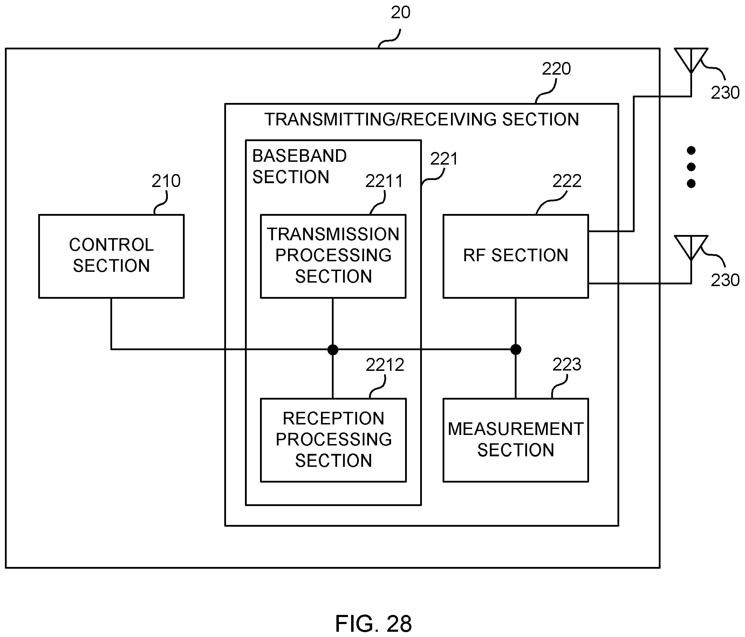

FIG. 28 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmission beam and a reception beam by using digital beam foaming (for example, precoding), analog beam foaming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 receives a first signal in a first resource region and receives a second signal different from the first signal in a second resource region different from the first region. The control section 210 assumes that the first resource region is a common resource region used for a plurality of antenna groups and that the second resource region is a region for resources independently used for the respective plurality of antenna groups. The first signal may be a control signal, and the second signal may be a terminal-specific data signal. The first signal may be a terminal-common control signal, and the second signal may be a terminal-specific control signal. The first signal may be a terminal-common data signal, and the second signal may be a terminal-specific data signal.

Thus, the transmitting/receiving section 220 transmits a retransmission instruction to the network based on a reception status of the data channel, and receives the data channel retransmitted from an antenna group different from the source antenna group for the data channel. The transmitting/receiving section 220 may transmit a request to change the source antenna group for the data channel based on the reception status of the data channel. The antenna group for retransmission may be determined based on the measurement results for each antenna group for the retransmission instruction, and the transmitting/receiving section 220 may receive the signal retransmitted from the antenna group determined. The control section 210 may determine the antenna group intended for the retransmission instruction based on the measurement results for each antenna group for the retransmission instruction, and the transmitting/receiving section 220 may transmit the retransmission instruction by using the resource corresponding to the antenna group intended for the retransmission instruction.

The transmitting/receiving section 220 receives, from one or more antenna groups, at least one of a plurality of pieces of downlink control information for scheduling a plurality of data with the same content, and the control section 210 assumes that each of the plurality of data has been scheduled independently for each antenna group. The control section 210 may select downlink control information to be used from the plurality of pieces of downlink control information received, and the transmitting/receiving section 220 transmits data to be scheduled by using the downlink control information selected. The control section 210 may select the downlink control information to be used, based on the measurement results for the reference signal associated with each of the plurality of downlink control information received. The control section 210 may select the downlink control information to be used, based on the measurement results for each of the plurality of downlink control information received.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

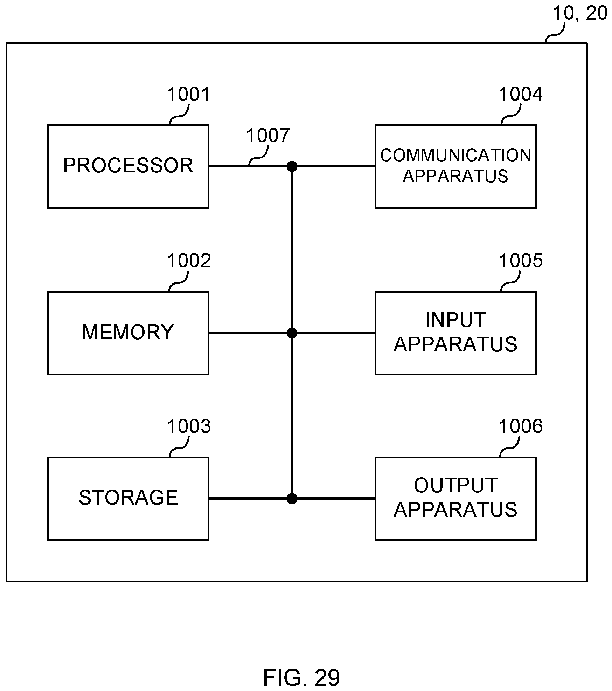

For example, a base station, a user terminal, and so on according to one embodiment of the present disclosure may function as a computer that executes the processes of the radio communication method of the present disclosure. FIG. 29 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure are used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-toterminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a transmitting section that transmits a retransmission instruction based on a reception status of a data channel; and
a receiving section that receives the data channel retransmitted from an antenna group different from a source antenna group for the data channel.

2. The terminal according to claim 1, wherein
the transmitting section transmits a request to change the source antenna group for the data channel, based on the reception status of the data channel.

3. The terminal according to claim 1, wherein
an antenna group for retransmission is determined based on measurement results for each antenna group for the retransmission instruction, and
the receiving section receives the signal retransmitted from the antenna group determined.

4. The terminal according to claim 1, comprising
a control section that determines an antenna group intended for the retransmission instruction, based on measurement results for each source antenna group for the data channel, wherein
the transmitting section uses a resource corresponding to the antenna group intended for the retransmission instruction to transmit the retransmission instruction.

5. A radio communication method for a terminal, the radio communication method comprising:
transmitting a retransmission instruction based on a reception status of a data channel; and
receiving the data channel retransmitted from an antenna group different from a source antenna group for the data channel.

6. A base station comprising:
a receiving section that receives a retransmission instruction based on a reception status of a data channel at a terminal; and
a transmitting section that causes the data channel to be retransmitted from an antenna group different from a source antenna group for the data channel.
